(19) Europäisches Patentamt
European Patent Office
Office européen des brevets

(11) **EP 1 854 516 A1**

(12) **EUROPEAN PATENT APPLICATION**
published in accordance with Art. 158(3) EPC

(43) Date of publication:
**14.11.2007 Bulletin 2007/46**

(51) Int Cl.:
***A63F 13/00*** *(2006.01)* ***G10K 15/04*** *(2006.01)*
***G10L 13/00*** *(2006.01)*

(21) Application number: **06714876.7**

(22) Date of filing: **28.02.2006**

(86) International application number:
**PCT/JP2006/303746**

(87) International publication number:
**WO 2006/093145 (08.09.2006 Gazette 2006/36)**

(84) Designated Contracting States:
**DE FR GB**

(30) Priority: **04.03.2005 JP 2005060312**

(71) Applicant: **Konami Digital Entertainment Co., Ltd.**
**Minato-ku**
**Tokyo 107-8324 (JP)**

(72) Inventor: **NAKAYAMA, Hiroyuki**
**c/o Konami Dig. Enter. Co.,Ltd.**
**Minato-ku, Tokyo 107-8324 (JP)**

(74) Representative: **Rüger, Barthelt & Abel**
**Patentanwälte**
**Postfach 10 04 61**
**73704 Esslingen (DE)**

(54) **VOICE OUTPUT DEVICE, VOICE OUTPUT METHOD, INFORMATION RECORDING MEDIUM, AND PROGRAM**

(57)    In a sound output device (201) for defining the difference between sounds from two sound producing units to enhance a feeling of reality, a storage unit (202) stores sound information and volume coefficients of two sound producing units moving in a virtual space, a distance calculating unit (203) calculates respective distances between a gazing point and the sound producing units, a change rate calculating unit (204) calculates change rates at which the volumes of sounds produced by the sound producing units change as they move away respective distances, an amplification factor calculating unit (205) calculates, for a sound producing unit having a larger volume coefficient, an amplification factor that is larger than its change rate and calculates, for a sound producing unit having a smaller volume coefficient, an amplification factor that is smaller than its change rate, and a mixing and outputting unit (206) amplifies sound information respectively associated with sound producing units by amplification factors respectively calculated for respective sound producing units and outputs the sound obtained by adding the amplified results.

FIG.2

**Description**

Technical Field

The present invention relates to a sound output device and sound output method suitable for defining the difference between sounds from two sound producing units moving in a virtual space to enhance a feeling of reality, a computer readable program for recording a program for realizing these on a computer, and the program.

Background Art

Conventionally, there has been proposed a technique for allowing a player to operate, by using a controller, a vehicle of any type such as a motorcycle, a car, or an airplane, or a character who runs and jumps on the ground, flies in the sky, or swims in the water (hereinafter collectively referred to as "object") in a virtual space such as a two-dimensional plane or a three-dimensional space, to move the object in the virtual space, or automatically move the object according to a predetermined algorithm in the virtual space, and participate in a competition.

There has also been proposed a technique for generating sound presumably produced by the object at this time to provide a more real environment. When sound is produced in a virtual space in this manner, the object is also called a sound producing unit. Such a technique is disclosed in, for example, the following literature.
Patent Literature 1: Japanese Patent Publication No. 3455739

In Patent Literature 1, there has been proposed a technique for prioritizing in a horse race game the hooves of the horses in the order of closeness to a viewpoint location, and grouping together the sounds of the hoof-beats produced from those hooves with lower priority to reduce the number of sounds used in synthesized output.

Techniques for synthesizing and outputting sounds produced by an object moving in a virtual space in this manner are critical from the viewpoint of enabling the user to perceive the state of a virtual space.

Disclosure of Invention

Problem to be Solved by the Invention

In a case where a plurality of objects provided in a virtual space produce sounds as described above, it is sometimes preferable to enhance the difference between sounds produced by these objects so that the user can clearly perceive contrast between the objects. Thus, a technique for addressing such a need has been in demand.
The present invention has been made to overcome problems such as described above, and it is an object of the present invention to provide a sound output device and sound output method suitable for defining the difference between sounds from two sound producing units moving in a virtual space to enhance a feeling of reality, a computer readable program for recording a program for realizing these on a computer, and the program.

Means for Solving the Problem

To achieve the above objective, the following invention will be disclosed according to the principle of the present invention.

A sound output device according to a first aspect of the present invention includes a storage unit, a distance calculating unit, a change rate calculating unit, an amplification factor calculating unit, and a mixing and outputting unit, which are configured as follows.

That is, the storage unit stores the sound information and volume coefficients respectively associated with two sound producing units moving in a virtual space.

Typically, the sound information is stored in a storage medium such as CD-ROM (Compact Disk Ready Only Memory), hard disk, etc., as a file of a format such as PCM (Pulse Coded Modulation), MP3 (MPeg audio layer 3), etc.. The volume coefficients are coefficients related to the degree of "intensity" of the sound information, and are associated with the amount of energy of the sound output from the sound producing unit, the average volume of the sound information, etc.

Meanwhile, the distance calculating unit calculates the respective distances between a predetermined gazing point and the two sound producing units in the virtual space.

Here, the predetermined gazing point typically corresponds to a viewpoint location in a case where three-dimensional graphics are displayed in a virtual space. The volume of the sound produced by a sound producing unit becomes softer as the distance from the gazing point becomes longer, and thus, in order to take into consideration the effect caused by this distance, the distance between the gazing point and the sound producing unit is calculated. Furthermore, the "distance" employed may be normal distance (the size of the difference between position vectors), squared distance (the square of the size of the difference between position vectors), or Manhattan distance (the sum of the absolute values of each element of the difference between position vectors).

Furthermore, the change rate calculating unit calculates the change rates at which the volumes of the sounds respectively produced from the two sound producing units change as the sound producing units move away the calculated respective distances.

Since the volume of the sound heard decreases as the distance between the sound producing unit and the gazing point at which the sound produced by thereby is heard increases, the change rate calculating unit finds the change rate that indicates the degree to which the volume decreases. The normal sound produced by a sound producing unit in a virtual space can be simulated by simply multiplying the amplitude of the wave based on the sound information of the sound producing unit by this change rate.

Then, the amplitude factor calculating unit calculates, for a sound producing unit associated with the larger of the two volume coefficients, an amplification factor that is larger than its change rate, and calculates, for a sound producing unit associated with the smaller of the two volume coefficients, an amplification factor that is smaller than its change rate.

While the sound produced by a sound producing unit in a virtual space can be simulated by simply multiplying the amplitude of the sound information by the change rate as described above, to enhance the difference and define the contrast between the sounds produced from two sound producing units, the sound producing unit having a larger volume coefficient adopts an amplification factor that is larger than its identified change rate, and the sound producing unit having a smaller volume coefficient adopts an amplification factor that is smaller than its identified change rate. Preferred embodiments that take into consideration various calculation methods will be described later.

Meanwhile, the mixing and outputting unit amplifies the sound information respectively associated with the two sound producing units by amplification factors calculated for the sound producing units, and outputs the sound obtained by adding the amplified results.

That is, the respective sound information of the two sound producing units is amplified by the identified respective amplification factors and the waveforms are added, thereby generating a waveform of the sound to be heard at the gazing point.

The present invention makes it possible to further enhance the difference and define the contrast between the sounds produced by two sound producing units based on volume coefficients assigned thereto, thereby enabling the user of the sound output device to more clearly grasp the features of the two sound producing units.

In the sound output device of the present invention, the mixing and outputting unit may be configured to amplify the sound information respectively associated with the two sound producing units by the respectively calculated change rates and output the sound obtained by adding the amplified results in a case where the position of the predetermined gazing point and the positions of the two sound producing units in the virtual space satisfy predetermined conditions, and to amplify the sound information respectively associated with the two sound producing units by amplification factors respectively calculated for the sound producing units and output the sound obtained by adding the amplified results in a case where the predetermined conditions are not satisfied.

Cases also exist where the above-described difference need not be defined, such as, for example, a case where the direction in which the sound of a sound producing unit is produced is indicated by stereo sound output or 5.1 channel sound output, or in a case where the orientations in which two sound producing units viewed from a gazing point are arranged in a virtual space are away from each other. Here, in such a case, the two sets of sound information are simply multiplied by the change rates and then added.

Various conditions may be employed for the relationship between the positions of the two sound producing units and the position of the gazing point, such as, for example, whether or not the angle formed by the first sound producing unit, the gazing point, and the second sound producing unit is less than a certain angle, or whether or not the distance between the first sound producing unit and the second sound producing unit is less than a certain length.

The present invention makes it possible to provide a sound output device that outputs sound without enhancing contrast in a case where there is little need to enhance the difference between sounds due to the positional relationship of the two sound producing units, thereby leaving the user with a natural impression.

Further, in the sound output device according to the present invention, the amplification factor calculating unit may be configured to, using the ratio of the greater to the smaller of the two volume coefficients, set the amplification factor for the sound producing unit associated with the greater of the two volume coefficients as the product of the change rate and the ratio, and set the amplification factor for the sound producing unit associated with the smaller of the two volume coefficients as the product of the change rate and the inverse of the ratio.

For example, given a volume coefficient p1, a change rate c1, and an amplification factor A1 of one sound producing unit, and a volume coefficient p2, a change rate c2, and an amplification factor A2 of the other sound producing unit, where p1 > p2 > 0, then:

$$A1 = c1 \times (p1/p2) > c1;$$

$$A2 = c2 \times (p2/p1) < c2$$

The present invention, in the above-described preferred embodiment of the present invention, makes it possible to simply calculate an amplification factor by using a volume coefficient.

Further, in the sound output device according to the present invention, the amplification factor calculating unit may be configured to, using a predetermined power of the ratio of the greater to the smaller of the two volume coefficients, set the amplification factor for the sound producing unit associated with the greater of the two volume coefficients as the product of the change rate and the predetermined power of the ratio, and set the amplification factor of the sound producing unit associated with the smaller of the two volume coefficients as the product of the change rate and the inverse of the predetermined power of the ratio.

Similar to the above-described example, given a predetermined power R (where $R \geq 1$), then:

$$A1 = c1 \times (p1/p2)^{R} > c1;$$

$$A2 = c2 \times (p2/p1)^{R} < c2$$

The present invention, in the above-described preferred embodiment of the present invention, makes it possible to simply calculate an amplification factor by using a volume coefficient.

Further, in the sound output device according to the present invention, the mixing and outputting unit may be configured to use saturated addition in the addition of the sound information.

In particular, in the calculation that amplifies the sound information based on the amplification factor and change rate, saturated multiplication or ordinary multiplication is employed and, for the addition difference, saturated addition is used.

The present invention makes it possible to simulate a "sound distortion" phenomenon by using saturated addition in a case where the volume becomes extremely loud, and therefore provide more intense sound to a user in a case where the contrast is to be enhanced prior to sound output.

A sound output method according to another aspect of the present invention uses a storage unit, includes a distance calculating step, a change rate calculating step, an amplification factor calculating step, and a mixing and outputting step, which are configured as follows.

That is, the storage unit stores the sound information and volume coefficients respectively associated with two sound producing units moving in a virtual space.

Meanwhile, in the distance calculating step, the respective distances between a predetermined gazing point and the two sound producing units in the virtual space are calculated.

Furthermore, in the change rate calculating step, the change rates at which the volumes of the sounds respectively produced from the two sound producing units change as the sound producing units move away the calculated respective distances are calculated.

Then, in the amplitude factor calculating step, for a sound producing unit associated with the larger of the two volume coefficients, an amplification factor that is larger than its change rate is calculated, and, for a sound producing unit associated with the smaller of the two volume coefficients, an amplification factor that is smaller than its change rate is calculated.

Meanwhile, in the mixing and outputting step, the sound information respectively associated with the two sound producing units is amplified by amplification factors calculated for the sound producing units, and the sound obtained by adding the amplified results is output.

A program according to another aspect of the present invention is configured to control a computer to function as the above-described sound output device, or to execute the above-described sound output method on a computer. The program of the present invention can be recorded on a computer readable information storage medium, such as a compact disk, a flexible disk, a hard disk, a magneto-optical disk, a digital video disk, a magnetic tape or a semiconductor memory.

The program can be distributed and sold, independently of a computer which executes the program, over a computer communication network. The information storage medium can be distributed and sold, independently of the computer.

Effect of the Invention

According to the present invention, it is possible to provide a sound output device and sound output method suitable for defining the difference between sounds from two sound producing units to enhance a feeling of reality, a computer readable program for recording a program for realizing these on a computer, and the program.

Brief Description of Drawings

[FIG.1] An explanatory diagram illustrating the schematic configuration of a typical information processing device on which a sound output device according to one embodiment of the present invention is realized.
[FIG. 2] An exemplary diagram illustrating the schematic configuration of a sound output device according to one embodiment of the present invention.
[FIG. 3] A flowchart illustrating the flow of control of sound output processing executed on the sound output device.
[FIG. 4] An explanatory diagram illustrating the positional relationship between a gazing point and two sound producing units arranged in a virtual space.

Description of Reference Numerals

| | |
|---|---|
| 100 | information processing device |
| 101 | CPU |
| 102 | ROM |
| 103 | RAM |
| 104 | interface |
| 105 | controller |
| 106 | external memory |
| 107 | image processor |
| 108 | DVD-ROM drive |
| 109 | NIC |
| 110 | sound processor |
| 201 | sound output device |
| 202 | storage unit |
| 203 | distance calculating unit |
| 204 | change rate calculating unit |
| 205 | amplification factor calculating unit |
| 206 | mixing and outputting unit |
| 401 | virtual space |
| 405 | gazing point |
| 411 | sound producing unit |
| 412 | sound producing unit |

Best Mode for Carrying Out the Invention

An embodiment of the present invention will be described below. While the following describes an embodiment in which the invention is adapted to a game device on which three-dimensional graphics are displayed and sound is output for the ease of understanding, the invention can also be adapted to information processing apparatuses, such as various computers, PDAs (Personal Data Assistants) and cellular phones. That is, the embodiment to be described below is given by way of illustration only, and does not limit the scope of the invention. Therefore, those skilled in the art can employ embodiments in which the individual elements or all the elements are replaced with equivalent ones, and which are also encompassed in the scope of the invention.

Embodiment 1

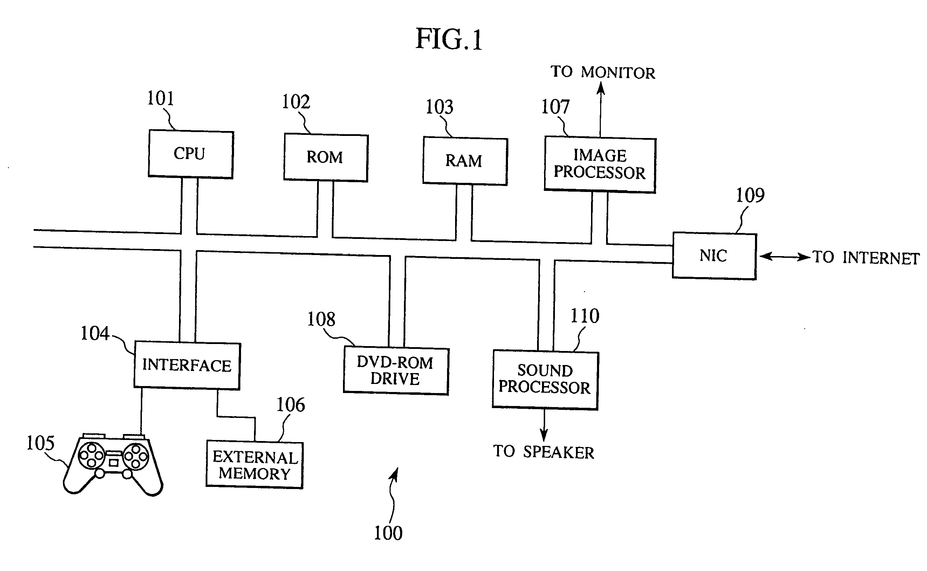

FIG. 1 is an explanatory diagram illustrating the schematic configuration of a typical information processing device on which a sound output device of the present invention will be realized. A description will be given hereinbelow referring to these diagrams.

An information processing device 100 comprises a CPU (Central Processing Unit) 101, a ROM 102, a RAM (Random Access Memory) 103, an interface 104, a controller 105, an external memory 106, an image processor 107, a DVD-ROM (Digital Versatile Disc ROM) drive 108, an NIC (Network Interface Card) 109, and a sound processor 110. As a DVD-ROM storing a program and data for a game is loaded into the DVD-ROM drive 108 and the information processing device 100 is powered on, the program is executed to realize the display device of the embodiment.

The CPU 101 controls the general operation of the information processing device 100, and is connected to individual components to exchange a control signal and data therewith. Further, by using an ALU (Arithmetic Logic Unit) (not shown), the CPU 101 can perform arithmetic operations such as addition, subtraction, multiplication, division, etc., logical operations such as logical addition, logical multiplication, logical negation, etc., bit operations such as bit addition, bit multiplication, bit inversion, bit shift, bit rotation, etc., on a storage area, or a register (not shown) which can be accessed at a high speed. Furthermore, the CPU 101 itself may be designed to be able to rapidly perform saturate operations such as addition, subtraction, multiplication, division, etc., for handling multimedia processes, vector operations such as trigonometric function, etc., or may realize these with a coprocessor.

An IPL (Initial Program Loader) which is executed immediately after power-on is recorded in the ROM 102. As the IPL is executed, the program recorded in the DVD-ROM is read into the RAM 103 and is executed by the CPU 101. Further, the RAM 102 stores a program and various data for an operating system necessary for controlling the overall operation of the information processing device 100.

The RAM 103 is for temporarily storing data and programs, and retains the program and data read from the DVD-ROM, and other data needed for progressing a game and chat communication. Further, the CPU 101 performs processes such as securing a variable area in the RAM 103 to work the ALU directly upon the value stored in the variable to perform operations, or once storing the value stored in the RAM 103 in the register, performing operations on the register, and writing back the operation result to the memory, etc.

The controller 105 connected via the interface 104 receives an operation input which is made when a user plays a game such as a racing game.

The external memory 106 detachably connected via the interface 104 rewritably stores data indicating the play status (past performance, etc.) of a racing game, etc., data indicating the progress status of the game, data of chat communication logs (records), etc. As the user makes an instruction input via the controller 105, these data can adequately be recorded in the external memory 106.

The program for realizing the game and the image data and sound data accompanying the game are recorded in the DVD-ROM to be loaded into the DVD-ROM drive 108. Under the control of the CPU 101, the DVD-ROM drive 108 performs a process of reading from the DVD-ROM loaded therein to read a necessary program and data, and these are temporarily stored in the RAM 103 or the like.

The image processor 107 processes data read from the DVD-ROM by means of the CPU 101 and an image operation processor (not shown) the image processor 107 has, and then records the data in a frame memory (not shown) in the image processor 107. The image information recorded in the frame memory is converted to a video signal at a predetermined synchronous timing, which is in turn output to a monitor (not shown) connected to the image processor 107. Thereby, image displays of various types are available.

The image operation processor can enable fast execution of an overlay operation of a two-dimensional image, a transparent operation like α blending, and various kinds of saturate operations.

It is also possible to enable fast execution of an operation of rendering polygon information which is arranged in virtual three-dimensional space and to which various kinds of texture information are added, by a Z buffer scheme to acquire a rendered image with a downward view of a polygon toward a predetermined view point position, arranged in the virtual three-dimensional space, from the predetermined view point position.

Further, the CPU 101 and the image operation processor cooperate to be able to write a string of characters as a two-dimensional image in the frame memory or on each polygon surface according to font information which defines the shapes of characters.

The NIC 109 serves to connect the information processing device 100 to a computer communication network (not shown), such as the Internet. The NIC 109 includes an analog modem according to the 10 BASE-T/101 BASE-T standard which is used at the time of constructing a LAN (Local Area Network) or for connecting to the Internet using a telephone circuit, an ISDN (Integrated Services Digital Network) modem, an ADSL (Asymmetric Digital Subscriber Line) modem, a cable model for connecting to the Internet using a cable television circuit, or the like, and an interface (not shown) which intervenes between these modems and the CPU 101.

The sound processor 110 converts sound data read from the DVD-ROM to an analog sound signal, and outputs the sound signal from a speaker (not shown) connected thereto. Under the control of the CPU 101, the sound processor 110 generates sound effects and music data to be generated during progress of the game, and outputs sounds corresponding thereto from a speaker.

In a case where the sound data recorded on the DVD-ROM is MIDI data, the sound processor 110 refers to the sound source data included in the data, and converts the MIDI data to PCM data. Further, in a case where the sound data is compressed sound data of ADPCM format or Ogg Vorbis format, etc., the sound processor 110 expands the data, converting it to PCM data. The PCM data is D/A (Digital/Analog) converted at a timing corresponding to the sampling frequency of the data and output to the speaker, thereby enabling sound output.

In addition, the information processing device 100 may be configured to achieve the same functions as the ROM 102, the RAM 103, the external memory 106, and the DVD-ROM or the like which is to be loaded into the DVD-ROM drive 108 by using a large-capacity external storage device, such as a hard disk.

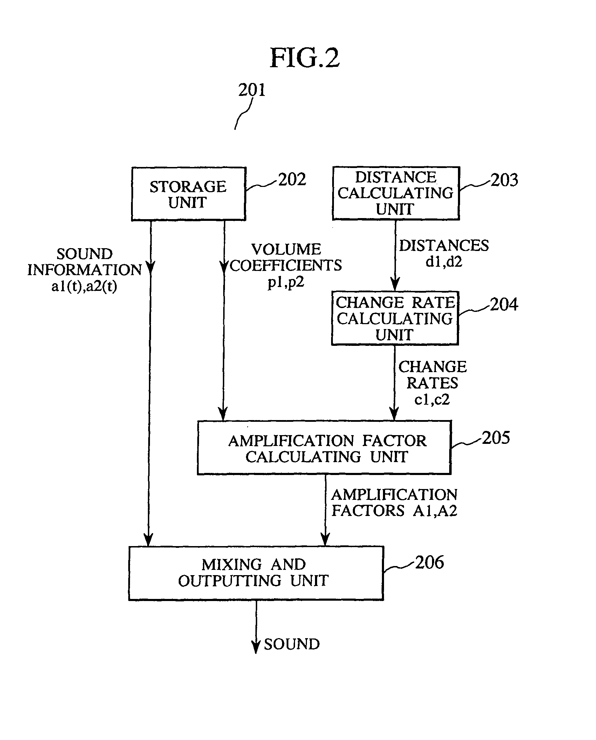

FIG. 2 is an exemplary diagram illustrating the schematic configuration of a sound output device according to one embodiment of the present invention. The sound output device is realized on the above-described information processing device 100. A description will be given hereinbelow referring to these diagrams.

The sound output device 201 includes a storage unit 202, a distance calculating unit 203, a change rate calculating unit 204, an amplification factor calculating unit 205, and a mixing and outputting unit 206.

First, the storage unit 202 stores the sound information and volume coefficients respectively associated with two sound producing units moving in a virtual space.

In the present embodiment, the sound information is a file of a format such as PCM format or MP3 format. The volume coefficients are coefficients related to the degree of "intensity" of the sound information, and are associated with the amount of energy of the sound output from the sound producing unit, the average volume of the sound information, etc.

In a case where the average volume of the sound information is employed as the volume coefficient, the volume coefficients may be found and stored in the storage unit 202 in advance, or may be found in realtime by scanning the sound information as necessary and storing the results in the storage unit 202.

The RAM 103, DVD-ROM or CD-ROM loaded in the DVD-ROM drive 108, or a large-capacity external storage device such as a hard disk functions as the storage unit 202.

Here, for example, it is assumed that the volume coefficient of one sound producing unit is p1 and the volume coefficient of the other sound producing unit is p2, where p1 > p2 > 0.

Based on the amplification of elapsed time t, the sound information of one sound producing unit is expressed as a1(t), and the sound information of the other sound producing unit is expressed as a2(t).

The volume coefficients may be arbitrarily determined as follows. Given that the sound information is repeatedly reproduced at time lengths T and T,' respectively, in a case where the volume coefficients are average volumes, the volume coefficients are respectively established as follows:

$$p1 = (1/T)\int_0^T |\, a1(t)\,|^2\, dt;$$

$$p2 = (1/T')\int_0^{T'} |\, a2(t)\,|^2\, dt;$$

In a case where the volume coefficients are average amplitudes, the volume coefficients may be respectively found using the following calculations:

$$|\, p1\,|^2 = (1/T)\int_0^T |\, a1(t)\,|^2\, dt;$$

$$|\, p2\,|^2 = (1/T')\int_0^{T'} |\, a2(t)\,|^2\, dt;$$

Here, the integral may be simply calculated from the PCM waveform, etc.

The RAM 103 has other areas for storing various state parameters, such as the positions and speed of the two sound producing units and the gazing point (the viewpoints from which the virtual space is observed) in the virtual space, and movement within the virtual space is adequately performed based on user instruction input and predetermined algorithms.

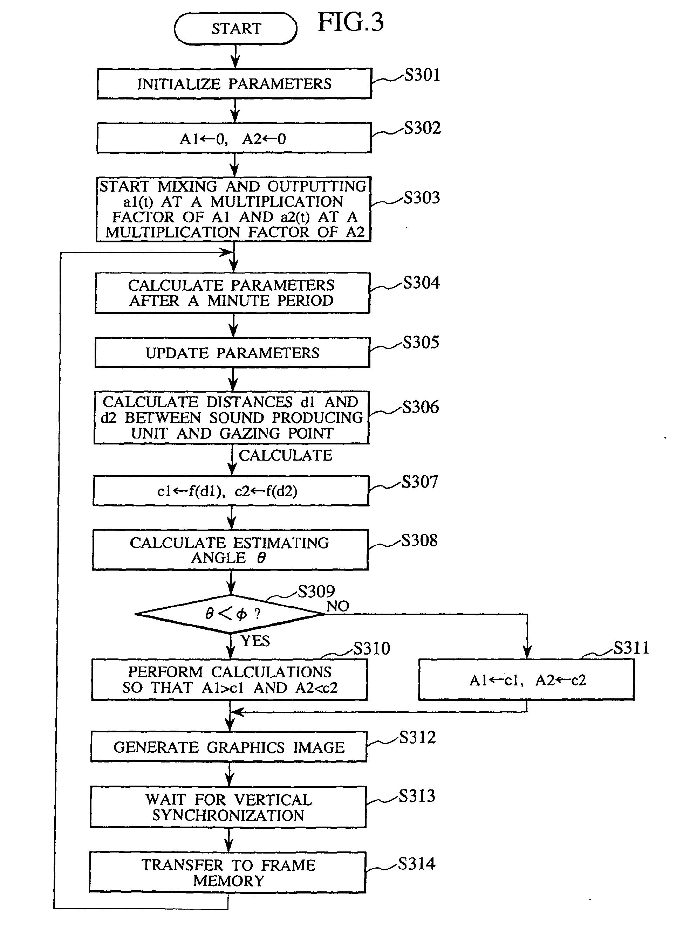

The sound output processing begins in the sound output device 201 from a state in which such sound information, sound coefficients, etc., are stored in the storage unit 202. FIG. 3 is a flowchart illustrating the flow of control of sound output processing executed on the sound output device. A description will be given hereinbelow referring to these diagrams.

First, the various state parameters such as the positions, etc., of the gazing point and two sound producing units are initialized (step S301). The initialization is equivalent to the initialization prior to the start of playing the game, and each initial value may be a value stored in advance in the DVD-ROM, the external memory 106, etc., or may be determined using random numbers.

Then, 0 is set in the area that stores the multiplication factors A1 and A2 prepared in the RAM 103 (step S302).

Furthermore, the mixing and outputting unit 206 issues to the sound processor 110 of the information processing device 100 instructions to "refer to the amplification factors A1 and A2 stored in the RAM 103, amplify the sound information a1(t) using the value stored in A1, amplify the sound information a2(t) using the value stored in A2, perform mixing, and output the sound" (step 5303).The amplification, mixing, and outputting of sound by sound processor 110 is performed in parallel with subsequent processing.

Thus, the CPU 101 functions as the mixing and outputting unit 206 with the RAM 103 and the sound processor 110.

Furthermore, saturate operations may be adequately used for the multiplication performed to amplify a1(t) by a multiplication factor of A1 and a2(t) by a multiplication factor of A2, and for the addition performed to mix these results. When saturate operations are used, an effect such as noise distortion in a case where the volume is loud due to close proximity of the microphone can be achieved.

After sound mixing and outputting begin in parallel, the present various state parameters such as the positions, etc., of the gazing point and two sound producing units are used to calculate the same state parameters after a predetermined minute period of time (step S304), and the state parameters stored in the RAM 103 are updated with the new calculated values (step S305).The interval between vertical synchronization interrupts of the monitor screen may be employed as the predetermined minute period, enabling suppression of the blur and flickering of the image of the display difference.

Further, the calculation of state parameters is in accordance with the laws of physics established within a virtual space, and updates are performed based on instruction input provided by the player using the controller 105 and instruction input generated by the CPU 101 based on a predetermined algorithm. For example, a method similar to the method that determines the behavior of the player's character or other characters in a racing game or horse race game may be employed.

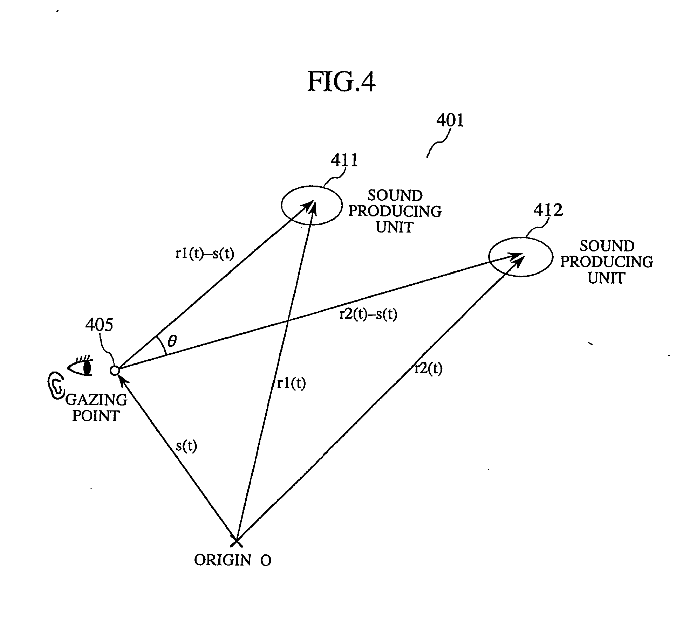

FIG. 4 is an explanatory diagram illustrating the positional relationship between a gazing point and two sound producing units arranged in a virtual space at time t after having been updated in this manner. A description will be given hereinbelow referring to these diagrams.

As shown in the figure, in a virtual space 401, the position vector of a gazing point 405 is established as s(t), the position vector of a sound producing unit 411 associated with the volume coefficient p1 is established as r1(t), and a position vector of a sound producing unit 412 associated with the volume coefficient p2 is established as r2(t).

In a case where the gazing point 405, the sound producing unit 411, and the sound producing 412 are so arranged, the squared distance and the Euclidean distance between the gazing point 405 and the sound producing unit 411 can be respectively expressed as follows:

$$\left| r1(t)\text{-}s(t) \right|^2 = [r1(t)\text{-}s(t)]\bullet[r1(t)\text{-}s(t)]$$

and:

$$\left| r1(t)\text{-}s(t) \right|$$

Similarly, the squared distance and Euclidean distance between the gazing point 405 and the sound producing unit 411 can be respectively expressed as follows:

$$\left| r2(t)\text{-}s(t) \right|^2 = [r2(t)\text{-}s(t)]\bullet[r2(t)\text{-}s(t)]$$

and:

$$\left| r2(t)\text{-}s(t) \right|$$

Where u•v indicates the inner product of a vector u and a vector v.

Further, the Manhattan distance, in a case where an Euclidean coordinate system is employed, can be found as the sum of the absolute values of the respective elements in the x, y, and z axial directions of vector r1(t)-s(t), etc.

After the positional relationship has been updated as described above, the distance calculating unit 203 calculates the respective distances between the predetermined gazing point 405 and the sound producing units 411 and 412 in the virtual space 401 (step S306).

When the squared distance, the Euclidean distance, or the Manhattan distance is employed as the "distance," a distance d1 between the gazing point 405 and the sound producing unit 411, and a distance d2 between the gazing point 405 and the sound producing unit 412 can be found using a vector calculation such as described above. Thus, the CPU 101 functions as the distance calculating unit 203 with the RAM 103, etc. These distances d1 and d2 are also temporarily stored in the RAM 103.

Subsequently, the change rate calculating unit 204 calculates change rates c1 and c2 that change as the volumes of the sounds respectively produced by the sound producing unit 411 and the sound producing unit 412 move away from the gazing point 405 by the respective distances d1 and d2 (step S307).

Given function f(•) for finding these change rates c1 and c2, the change rates c1 and c2 can be written as follows:

$$c1 = f(d1);$$

$$c2 = f(d2)$$

The function f(•) is typically a monotonically decreasing function that increases to the extent the sound producing unit is near (i.e., increases as distance decreases), and decreases to the extent the sound producing unit is far away (i.e., decreases as distance increases).

For example, given positive constants K and J, functions such as the following may be employed.

$$(1)\ f(s) = K - J \times s \ (0 \le s \le K/J);$$
$$= 0 \quad (K/J \le s)$$

$$(2)\ f(s) = K/s;$$

$$(3)\ f(s) = K/(s \times s);$$

$$(4)\ f(s) = K \times \exp(-J \times s)$$

As described above, since the volume of the sound heard decreases as the distance between the sound producing units 411 and 412 and the gazing point 405 at which the sounds produced by these are heard increases, the change rate calculating unit 204 finds the change rate that indicates the degree to which the volume decreases. The normal sound produced by a sound producing unit in the virtual space 401 can be simulated by simply multiplying the amplitude of the wave based on the sound information of the sound producing unit by the change rate.

Furthermore, in the present embodiment, in conjunction with the distance calculation, the angles θ and cos θ at which the sound producing unit 411 and the sound producing unit 412 are to be estimated from the gazing point 405 are calculated (step 5308).That is, θ and cos θ are calculated by the following:

$$\cos \theta = [r1(t)\text{-}s(t)]\bullet[r2(t)\text{-}s(t)] / [\,|\,r1(t)\text{-}s(t)\,|\ \text{x}\ |\,r2(t)\text{-}s(t)\,|\,];$$

$$\theta = \arccos[r1(t)\text{-}s(t)]\bullet[r2(t)\text{-}s(t)] / [\,|\,r1(t)\text{-}s(t)\,|\ \text{x}\ |\,r2(t)\text{-}s(t)\,|\,]$$

The extent to which the sound of the sound producing unit 411 sound source and the sound of the sound producing unit 412 sound source that are to arrive at the gazing point 405 approach from different directions can be identified. In this calculation, values common to the above-described distance calculation are used, making it efficient to collectively perform the common calculations accordingly.

Next, the CPU 101 assesses whether or not the calculated angle θ is smaller than a predetermined angle Φ (step S309).As the predetermined angle Φ, a somewhat larger angle is preferred. It is convenient, however, to set the angle to 90 degrees ($\pi/2$), for example, which enables assessment based on the positive/negative state of the inner product [r1(t)-s(t)]•[r2(t)-s(t)] without directly calculating θ and cos θ, thereby reducing the calculation amount.

Whether or not the angle 0 is smaller than the predetermined angle can also be determined by whether or not the angle θ is greater than a predetermined value corresponding to cos θ. When the latter of these determination methods is used, the operation is completed without performing the arccos (•) calculation, which has a high calculation cost.

In a case where, as a result of assessment, the angle θ has been assessed as smaller than the predetermined angle Φ (step S309: Yes), the amplification calculating unit 205 calculates the amplification factor A1 that is greater than the change rate c1 corresponding to the sound producing unit 411 associated with the greater of the two volume coefficients p1, and the amplification factor A2 that is smaller than the change rate c2 corresponding to the sound producing unit 412 associated with the smaller of the two volume coefficients p2, and stores and updates the calculation results in the above-described area of the RAM 103 (step S310).

That is, when p1 > p2, A1 which satisfies A1 > c1 and A2 which satisfies A2 < c2 are each respectively calculated using some type of method.

While the sound produced by a sound producing unit in the virtual space 401 can be simulated by simply multiplying the amplitude of the sound information by the change rate as described above, to enhance the difference and define the contrast between the sounds produced by the sound producing unit 411 and the sound producing unit 412, the sound producing unit having a larger volume coefficient employs an amplification factor that is larger than its identified change rate, and the sound producing unit having a smaller volume coefficient employs an amplification factor that is smaller than its identified change rate. While various methods of calculation may be considered, a method such as the following, for example, is conceivable.

(1) Given a p1/p2 ratio > 1 and its inverse p2/p1 < 1 for p1 and p2, then:

$$A1 = c1 \ \text{x} \ (p1/p2) > c1;$$

$$A2 = c2 \ \text{x} \ (p2/p1) < c2$$

(2) Furthermore, in addition to the above (1), with use of a predetermined positive integer R that is greater than or equal to 1, then:

$$A1 = c1 \ \text{x} \ (p1/p2)^{R} > c1;$$

$$A2 = c2 \ \text{x} \ (p2/p1)^{R} < c2$$

(3) Using a positive integer P that is greater than 1 and a positive integer Q that is less than 1, then:

$$A1 = c1 \times P > c1;$$

$$A2 = c2 \times Q < c2$$

As described above, the mixing and outputting unit 206 amplifies the sound information a1(t) and a2(5) respectively associated with the sound producing unit 411 and the sound producing unit 412 by the respectively calculated amplification factors A1 and A2, and outputs the added amplified results, thereby further enhancing the difference and defining the contrast between the sounds produced by the sound producing unit 411 and the sound producing unit 412 based on the volume coefficients p1 and p2 assigned thereto, making it possible for the user to more clearly grasp the features of the sound producing unit 411 and the sound producing unit 412.

After the A1 and A2 calculation and the RAM 103 update are completed, the flow proceeds to step S312.

On the other hand, in a case where the angle θ has been assessed as greater than or equal to the predetermined angle Φ (step 5309: No), RAM 103 is updated so that the change rate c1 is employed as the amplification factor A1 and the change rate c2 is employed as the amplification factor A2 (step S311), and the flow proceeds to step S312. This applies to a case where the sound producing unit 411 and the sound producing unit 412 are sufficiently separated and there is no need to define the contrast thereof. A case also exists where such a difference need not be defined, such as, for example, a case where the direction in which the sound of a sound producing unit is produced is indicated by stereo sound output or 5.1 channel sound output, or in a case where the orientations in which the sound producing unit 411 and the sound producing unit 412 viewed from the gazing point 405 are arranged in the virtual space 401 are away from each other.

Furthermore, the cos θ and θ calculation and the θ and Φ comparison may be completely omitted and the processing of step S310 always performed.

Further, rather than using the estimating angle θ, the assessment may be made according to whether or not the distance |r1(t)-r2(t)| between the sound producing unit 411 and the sound producing unit 412 of the virtual space 401 is less than a predetermined threshold value.

Furthermore, depending on the form of the hardware of the sound processor 110, a case also exists where the amplification factors A1 and A2 that should be changed at an intended time are directly instructed after the sound information a1(t) and a2(t) subject to mixing are set. In such a case, an instruction that specifies the amplification factors A1 and A2 to the hardware of the sound processor 110 may be issued in place of the processing that stores and updates the amplification factors A1 and A2 in the RAM 103.

After the amplification factors A1 and A2 stored in the RAM 103 have been updated in this manner, a three-dimensional graphics image viewing from the gazing point 405 the virtual space 401 that includes the sound producing unit 411 and the sound producing unit 412 is generated (step 5312), the mode changes to standby mode until a vertical synchronization interrupt occurs (step 5313), the generated graphics image is transferred to frame memory once the vertical synchronization interrupt occurs (step S314), and the flow returns to step S304.

In this manner, the present invention makes it possible to further enhance the difference and define the contrast between the sounds produced by two sound producing units based on volume coefficients assigned thereto, thereby enabling the user of the sound output device to more clearly grasp the features of the two sound producing units.

Embodiment 2

The embodiment described hereafter corresponds to a case where there are three or more sound producing units (and it is preferable to define the contrast between each). That is, given n sound producing units and the volume coefficients p1, p2, p3, ..., pn thereof, the present embodiment considers the following relationship:

$$p1 > p3 > \ldots > pn > p2$$

First, the respective change rates for the sound producing units having the volume coefficients p1, p2, p3, ... , pn may be found in a similar manner as the above-described embodiment, and thus become:

$$c1, c2, c3, \ldots, cn$$

Next, the amplification factors A1 and A2 of the sound producing units having the volume coefficients p1 and p2 are found in a similar manner as the above-described embodiment.

Subsequently, the method for determining the amplification factors A3, ... , An respectively corresponding to the sound producing units having the volume coefficients p3, ..., pn is determined.

In such a case, for example, a method that determines the amplification factor Ai ($3 \leq I \leq n$) for the sound producing unit having the volume coefficient pi ($3 \leq i \leq n$) so that the following various relationships are satisfied is possible.

$$(1)\ A1/c1 : Ai/ci = Ai/ci : A2/c2;\ \text{that is,}\ Ai = ci \times [A1 \times A2 / (c1 \times c2)]^{1/2}$$

$$(2)\ A1/c1 : Ai/ci = p1 : pi;\ \text{that is,}\ Ai = ci \times pi \times A1 / (c1 \times p1)$$

$$(3)\ A2/c2 : Ai/ci = p2 : pi;\ \text{that is,}\ Ai = ci \times pi \times A2 / (c2 \times p2)$$

$$(4)\ (A1/c1 - Ai/ci):(Ai/ci - A2/c2) = (p1 - pi):(pi - p2);$$

that is, an internal division is performed.

Employing such a method makes it possible to further enhance the difference and define the contrast between sounds based on the volume coefficients assigned to each sound producing unit, even in a case where there are three or more sound producing units.

The present application claims priority based on Japanese Patent Application No. 2005-060312, the content of which is incorporated herein in its entirety.

Industrial Applicability

As explained above, according to the present invention, it is possible to provide a sound output device and sound output method suitable for defining the difference between the sounds from two sound producing units to enhance a feeling of reality, a computer readable information recording medium for storing a program for realizing these on a computer, and the program, and to apply these to realizing various competition games, etc., in a game device and to virtual reality techniques for providing various virtual experiences for educational purposes, etc.

**Claims**

1. A sound output device (201) comprising:

   a storage unit (202) that stores sound information and volume coefficients respectively associated with two sound producing units moving in a virtual space;
   a distance calculating unit (203) that calculates respective distances between a predetermined gazing point and the two sound producing units in the virtual space;
   a change rate calculating unit (204) that calculates change rates at which the volumes of the sounds respectively produced from the two sound producing units change as the sound producing units move away the respectively calculated distances;
   an amplitude factor calculating unit (205) that calculates, for a sound producing unit associated with the larger of the two volume coefficients, an amplification factor that is larger than its change rate, and calculates, for a sound producing unit associated with the smaller of the two volume coefficients, an amplification factor that is smaller than its change rate; and

a mixing and outputting unit (206) that amplifies sound information respectively associated with the two sound producing units by amplification factors respectively calculated for said sound producing units, and outputs the sound obtained by adding the amplified results.

2. The sound output device (201) according to claim 1, wherein the mixing and outputting unit (206) amplifies the sound information respectively associated with the two sound producing units by the calculated change rates and outputs the sound obtained by adding the amplified results in a case where the position of the predetermined gazing point and the positions of the two sound producing units in the virtual space satisfy predetermined conditions, and amplifies the sound information respectively associated with the two sound producing units by amplification factors calculated for the sound producing units and outputs the sound obtained by adding the amplified results in a case where the predetermined conditions are not satisfied.

3. The sound output device (201) according to claim 1, wherein said amplification factor calculating unit (205), using the ratio of the greater to the smaller of the two volume coefficients, sets the amplification factor for the sound producing unit associated with the greater of the two volume coefficients as the product of the change rate and the ratio, and sets the amplification factor for the sound producing unit associated with the smaller of the two volume coefficients as the product of the change rate and the inverse of the ratio.

4. The sound output device (201) according to claim 1, wherein said amplification factor calculating unit (205), using a predetermined power of the ratio of the greater to the smaller of the two volume coefficients, sets the amplification factor for the sound producing unit associated with the greater of the two volume coefficients as the product of the change rate and the predetermined power of the ratio, and sets the amplification factor for the sound producing unit associated with the smaller of the two volume coefficients as the product of the change rate and the inverse of the predetermined power of the ratio.

5. The sound output device (201) according to claim 1, wherein said mixing and outputting unit (206) uses saturated addition in the addition of the sound information.

6. A sound output method that uses a storage unit that stores sound information and volume coefficients respectively associated with two sound producing units moving in a virtual space, the sound output method comprising:

a distance calculating step of calculating respective distances between a predetermined gazing point and the two sound producing units in the virtual space;
a change rate calculating step of calculating change rates at which the volumes of the sounds respectively produced by the two sound producing units change as the sound producing units move away the respectively calculated distances;
an amplitude factor calculating step of calculating, for a sound producing unit associated with the larger of the two volume coefficients, an amplification factor that is larger than its change rate, and of calculating, for a sound producing unit associated with the smaller of the two volume coefficients, an amplification factor that is smaller than its change rate; and
a mixing and outputting step of amplifying sound information respectively associated with the two sound producing units by amplification factors calculated for the sound producing units, and outputting the sound obtained by adding the amplified results.

7. A computer-readable information recording medium storing a program for controlling a computer to function as:

a storage unit (202) that stores sound information and volume coefficients respectively associated with two sound producing units moving in a virtual space;
a distance calculating unit (203) that calculates respective distances between a predetermined gazing point and the two sound producing units in the virtual space;
a change rate calculating unit (204) that calculates change rates at which the volumes of the sounds respectively produced by the two sound producing units change as the sound producing units move away the respectively calculated distances;
an amplitude factor calculating unit (205) that calculates, for a sound producing unit associated with the larger of the two volume coefficients, an amplification factor that is larger than its change rate, and calculates, for a sound producing unit associated with the smaller of the two volume coefficients, an amplification factor that is smaller than its change rate; and
a mixing and outputting unit (206) that amplifies sound information respectively associated with the two sound producing units by amplification factors respectively calculated for the sound producing units, and outputs the sound obtained by adding the amplified results.

8. A program for controlling a computer to function as:

a storage unit (202) that stores sound information and volume coefficients respectively associated with two sound producing units moving in a virtual space;

a distance calculating unit (203) that calculates respective distances between a predetermined gazing point and the two sound producing units in the virtual space;

a change rate calculating unit (204) that calculates change rates at which the volumes of the sounds respectively produced by the two sound producing units change as the sound producing units move away the respectively calculated distances;

an amplitude factor calculating unit (205) that calculates, for a sound producing unit associated with the larger of the two volume coefficients, an amplification factor that is larger than its change rate, and calculates, for a sound producing unit associated with the smaller of the two volume coefficients, an amplification factor that is smaller than its change rate; and

a mixing and outputting unit (206) that amplifies sound information respectively associated with the two sound producing units by amplification factors respectively calculated for the sound producing units, and outputs the sound obtained by adding the amplified results.

FIG.1

# FIG.2

201

```
┌─────────────┐           ┌─────────────┐
│   STORAGE   │  202      │  DISTANCE   │  203
│    UNIT     │           │ CALCULATING │
│             │           │    UNIT     │
└─────────────┘           └─────────────┘
```

SOUND                VOLUME          DISTANCES
INFORMATION          COEFFICIENTS    d1,d2
a1(t),a2(t)          p1,p2

```
                          ┌─────────────┐
                          │ CHANGE RATE │  204
                          │ CALCULATING │
                          │    UNIT     │
                          └─────────────┘
```

CHANGE
RATES
c1,c2

```
        ┌──────────────────────────────┐
        │   AMPLIFICATION FACTOR        │  205
        │   CALCULATING UNIT            │
        └──────────────────────────────┘
```

AMPLIFICATION
FACTORS A1,A2

```
        ┌──────────────────────────────┐
        │      MIXING AND               │  206
        │    OUTPUTTING UNIT            │
        └──────────────────────────────┘
```

↓ SOUND

**FIG.3**

START

INITIALIZE PARAMETERS —S301

$A1 \leftarrow 0, \quad A2 \leftarrow 0$ —S302

START MIXING AND OUTPUTTING a1(t) AT A MULTIPLICATION FACTOR OF A1 AND a2(t) AT A MULTIPLICATION FACTOR OF A2 —S303

CALCULATE PARAMETERS AFTER A MINUTE PERIOD —S304

UPDATE PARAMETERS —S305

CALCULATE DISTANCES d1 AND d2 BETWEEN SOUND PRODUCING UNIT AND GAZING POINT —S306

CALCULATE

$c1 \leftarrow f(d1), \quad c2 \leftarrow f(d2)$ —S307

CALCULATE ESTIMATING ANGLE $\theta$ —S308

S309

$\theta < \phi$ ? — NO

YES

PERFORM CALCULATIONS SO THAT A1>c1 AND A2<c2 —S310

$A1 \leftarrow c1, \quad A2 \leftarrow c2$ —S311

GENERATE GRAPHICS IMAGE —S312

WAIT FOR VERTICAL SYNCHRONIZATION —S313

TRANSFER TO FRAME MEMORY —S314

# FIG.4

401

411 SOUND PRODUCING UNIT

412 SOUND PRODUCING UNIT

r1(t)−s(t)

r2(t)−s(t)

405

$\theta$

r1(t)

r2(t)

GAZING POINT

s(t)

ORIGIN O

| | | |
|---|---|---|
| **INTERNATIONAL SEARCH REPORT** | International application No. | |
| | PCT/JP2006/303746 | |

**A. CLASSIFICATION OF SUBJECT MATTER**
*A63F13/00*(2006.01), *G10K15/04*(2006.01), *G10L13/00*(2006.01)

According to International Patent Classification (IPC) or to both national classification and IPC

**B. FIELDS SEARCHED**

Minimum documentation searched (classification system followed by classification symbols)
*A63F13/00*(2006.01), *G10K15/04*(2006.01), *G10L13/00*(2006.01)

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | John De Goes et al., DirectX 3d Game Programming Nyumon, 1st edition, Impress Corp., 21 September, 2000 (21.09.00), 1st edition, pages 173 to 187 | 1-8 |
| Y | JP 2003-190624 A  (Konami Co., Ltd.), 08 July, 2003 (08.07.03), Par. No. [0041]; Figs. 3, 4, 7 (Family: none) | 1-8 |
| Y | JP 2005-46270 A  (Kabushiki Kaisha Konami Computer Entertainment Tokyo), 24 February, 2005 (24.02.05), Par. Nos. [0019] to [0021]; Figs. 1 to 4 (Family: none) | 1-8 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search | Date of mailing of the international search report |
| 22 March, 2006 (22.03.06) | 28 March, 2006 (28.03.06) |
| Name and mailing address of the ISA/ | Authorized officer |
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3455739 B
- JP 2005060312 A